Europäisches Patentamt

European Patent Office

Office européen des brevets

(11) Publication number: **0 314 265 B1**

## EUROPEAN PATENT SPECIFICATION

(45) Date of publication of patent specification: **05.08.92**   (51) Int. Cl.⁵: **A23L  1/16**

(21) Application number: **88304188.1**

(22) Date of filing: **09.05.88**

(54) **One-step flavored pasta products.**

(30) Priority: **28.01.88 US 149589**
**08.10.87 US 105704**

(43) Date of publication of application:
**03.05.89 Bulletin  89/18**

(45) Publication of the grant of the patent:
**05.08.92 Bulletin  92/32**

(84) Designated Contracting States:
**AT BE CH DE ES FR GB GR IT LI LU NL SE**

(56) References cited:
**EP-A- 0 239 656**
**DE-A- 1 767 016**
**DE-A- 2 159 292**
**US-A- 3 484 251**
**US-A- 3 762 931**

(73) Proprietor: **Borden, Inc.**
**180 East Broad Street**
**Columbus Ohio 43215(US)**

(72) Inventor: **Gillmore, Stephen Russell**
**2500 Maple Avenue**
**Cato, NY 13033(US)**
Inventor: **Merritt, Carleton George**
**1350 West River Road**
**Phoenix, NY 13135(US)**
Inventor: **Epstein, Arnold Ira**
**163 Pond Drive**
**Washington Township, NJ 07675(US)**

(74) Representative: **Wilkinson, Stephen John et al**
**Stevens, Hewlett & Perkins 1 St. Augustine's**
**Place**
**Bristol BS1 4UD(GB)**

**Description**

CROSS REFERENCE TO RELATED APPLICATION

This application is a continuation-in-part of Serial No. 105,704, filed October 8, 1987, now abandoned.

BACKGROUND OF THE INVENTION

In the past, a good flavored pasta meal required the addition of a flavor to the cooking water during preparation of the pasta or the addition of a flavoring agent to the pasta after it had been cooked and drained. The addition of a flavoring agent to the cooking water results in a pasta product with a starchy, gummy texture which is highly undesirable. The addition of a flavoring agent or sauce after the pasta has been cooked and drained is just an added, time-consuming step that could be eliminated if a flavoring agent could be incorporated into the pasta dough.

The incorporation of a flavoring agent into pasta dough has been unsuccessfully attempted, as evidenced by Hummel, Macaroni Products Manufacture. Processing and Packaging, Food Trade Press, Ltd., p. 12 (1966). Common flavoring agents are usually fat- or lipid-based, and therefore difficult to incorporate into pasta dough. The lipid-based flavoring agents cause the pasta dough to become discontinuous and break down.

Various attempts have also been made to manufacture a pasta product which is susceptible to microwave cooking. U.S. Patent 4,208,439 to Hsu describes an instant pasta product which can be prepared in a microwave oven. The Hsu pasta product is capable of microwave preparation because it is formed from a sheet of pregelatinized or precooked cereal flour dough.

A precooked, vacuum-dried alimentary paste is also used to make the casserole composition disclosed by Lawrence et al. in U.S. Patent 3,484,251. The Lawrence casserole composition is capable of preparation in a single cooking operation (although microwave cooking is not specifically disclosed). An alimentary paste tenderizer is used and selected from the group consisting of cysteine, water-soluble cysteine salts and cysteine hydrochloride.

U.S. Patent 3,762,931 to Craig et al. also discloses the use of edible sulfhydryl reducing substances such as cysteine, glutathione and sulfites in alimentary pastes. Craig et al. refer to those sulfydryl reducing substances as paste-modifying ingredients and claim that mixing and extrusion of the paste is more easily accomplished because less process water is necessary.

SUMMARY OF THE INVENTION

The invention relates to a pasta dough comprising a mixture of from 70 to 85% by weight of wheat flour, from 8 to 23% by weight of added moisture, a flavouring agent in an amount such that, after cooking, the flavour is retained in the resulting cooked pasta, and at least one ingredient selected from

i) a protein which coagulates at a temperature of 160°F (71.1°C) or less in an amount of from 0.50 to 2.50% by weight, and

ii) a sulfhydryl reducing agent in an amount of from 0.0075% to 0.075% by weight.

The pasta product is neither precooked nor pregelatinized, and yet is capable of one-step preparation in a microwave oven. The flavoring agents may be lipid-based. Even when lipid-based flavoring agents are utilized, the pasta dough remains continuous and does not break down.

High temperature drying techniques are the preferred method used to dry the pasta product, and such techniques result in a reduced loss of solids during the cooking of the pasta product.

The invention also relates to a snack food product which is made from the pasta dough as described above. The pasta dough is fried for a sufficient time so that the snack food product has a texture and consistency much like that of a potato chip.

DETAILED DESCRIPTION OF THE INVENTION

One embodiment of the invention relates to a pasta product comprising wheat flour, generally semolina flour, moisture, a protein which is coagulatable at low temperatures, i.e. a protein which coagulates at a temperature of 160°F (71.1°C) or less, and a flavoring agent. Wheat flour is the principal component of most traditional pasta products. In this invention, wheat flour is defined as the flour made from any wheat grain. Suitable wheat grains include, but are not limited to, durum wheat, hard wheat and soft wheat.

In order to make the pasta product, the wheat flour is mixed with water to form a dough. Included as an ingredient in the dough is a protein which coagulates at low temperatures (i.e. at a temperature of 160°F (71.1°C) or less). The low temperature-coagulatable protein forms a thin layer around the starch granules during extrusion. The layer maintains the integrity of the pasta dough even when lipid-based flavors are included in the dough. The integrity of the pasta product is maintained throughout the processing steps and during cooking. The optional inclusion of a sulfhydryl reducing agent permits the formation of an extrudable dough with less water than is used in conventional pasta making processes. The wheat flour is the major constituent of the dough and is present in an amount in the range of from 70% to 85% by weight of the dough. More preferably, the wheat flour is present in an amount of from 73% to 81% by weight of the dough.

A conventional pasta dough contains from 15% to 23% by weight added moisture and no sulfhydryl reducing agent. In contrast, a pasta dough which includes a sulfhydryl reducing agent contains from 8% to 23% by weight added moisture.

The reduced amount of moisture used to form the pasta dough reduces the energy costs associated with the manufacture of a pasta product. The reduced-moisture pasta dough will take less time to dry than a conventional dough, and will save energy costs in this manner. Reduced moisture also results in a decrease of flavor loss during drying of the pasta product. Flavor additives often form azeotropes with water and then evaporate with the water during drying. By reducing the added moisture of the pasta dough there are less azeotropic compounds formed, and therefore less loss of flavor from the pasta dough during drying.

Sulfhydryl reducing agents which have been found to be useful in the manufacture of pasta products include sodium metabisulfite ($Na_2S_2O_5$), cysteine, water-soluble cysteine salts, cysteine hydrochloride, glutathione and other sulfite salts. Sulfhydryl reducing agents are compounds which are capable of initiating reductions which reduce -S-S bonds in gluten to form -SH groups. The sulfhydryl reducing agents may be utilized either singularly or in combination. The percentage of the sulfhydryl reducing agent present in the pasta dough is in the range of from 0.0075% to 0.0750% by weight of the dough. The percentage range remains the same for a combination of sulfhydryl reducing agents.

The low temperature-coagulatable proteins which have been found to be useful in the manufacture of flavored pasta products are those which coagulate at temperatures of 160°F (71.1°C) or less. These proteins include, but are not limited to, albumin, whole egg, egg white, egg yolk, soy bean isolate and whey protein concentrate. The low temperature-coagulatable protein is present in the pasta dough in a concentration of from 0.50% to 2.50% by weight of the pasta dough.

The flavoring agents useful for incorporation in the pasta dough are numerous and include both lipid-based and non-lipid-based flavoring agents. Although non-lipid-based flavoring agents such as spinach and egg have been successfully incorporated into pasta dough in the past, lipid-based flavoring agents have not been successfully incorporated into a pasta dough. Some of the lipid-based flavoring agents which may be incorporated into the pasta dough are cheese paste, beef extract, beef tallow, chicken fat, butter flavor, sour cream and cheese. Each flavoring agent is necessarily present in different amounts and weight percentages than the other flavoring agents in order to produce a pasta product which will meet consumer preferences for optimum flavor characteristics. The examples presented below specify amounts and weight percentages of selected flavoring agents. However, generally, the flavoring agent or agents are present in the pasta dough in an amount sufficient to cause the pasta product to retain the particular flavor after cooking.

Seasonings may also be added to the pasta dough. However, seasonings merely serve to enhance or alter flavors and are not considered to be flavoring agents when used alone.

In one embodiment of the invention, pasta dough is prepared by a series of steps which begins with mixing of the low temperature-coagulatable protein with the flavoring agent and the process water. When non-lipid-based flavors are used, a solution is formed, and when lipid-based flavors are used, a uniform emulsion should be formed. Alternatively, both a lipid-based flavor and a non-lipid-based flavor may be used together, and a uniform emulsion should be formed with the process water before addition to the wheat flour. The wheat flour is present in an amount of from 70% to 85% by weight of the dough, and the flavoring agent is present in an amount sufficient to cause the pasta product to retain such flavor after cooking. The amounts used may be selected according to which flavor is used as related to consumer preferences. Both non-lipid-based and lipid-based flavoring agents may be used in pasta doughs made with low temperature-coagulatable protein. The amounts of particular flavoring agents that may be used in the pasta dough are set forth with more specificity in the examples below.

The emulsion or solution is then added to the chosen wheat flour and mixed in a vertical cutter mixer for approximately one minute, at which time the pasta dough is ready for extrusion in any of the conventional pasta shapes. These extruded pasta shapes are then preferably subjected to a high temperature drying step at about 180°F (82.2°C) dry bulb, and about 165°F (73.9°C) wet bulb, and at 72% relative humidity for approximately 75 minutes.

Extrusion can be performed with any acceptable extruder. Two extruders which have been found acceptable are the Demaco-S25 extruder or the Mapimpianti GF20 extruder. For optimal extrusion, the barrel temperature of the extruder should be approximately 120°F (49°C), the extruder should have 10 (250 mm) to 25 inches (625 mm) of vacuum, a power capacity of 5 to 10 amps, and a back pressure of 1800 (12409 kPa) to 2700 psi (18614 kPa). The extruded pasta product may be in any of the conventional pasta shapes, such as elbows, shells or conchiglioni, ziti, vermicelli, fettucine, tortellini, ravioli, manicotti, lasagna, rote or tortiglioni.

Low temperature-coagulatable protein is also used in pasta dough with sulfhydryl reducing agents. The same advantages of flavoring the pasta with lipid-based flavors are found with this type of dough, along with the additional advantage of being able to use a reduced amount of added moisture in the dough. The amounts of wheat flour and flavoring agent are the same as those described above. The low temperature-coagulatable protein is also present in the same percentages as described above for the pasta dough without sulfhydryl reducing agents, namely from 0.50% to 2.50% by weight of the pasta dough. Added moisture is present in the dough in reduced percentages of from 8% to 23% by weight of the pasta dough.

When preparing a pasta dough which contains both low temperature-coagulatable proteins and sulfhydryl reducing agents, the dry constituents (wheat flour and sulfhydryl reducing agents) are commonly dry-mixed separately from the mixture of the low temperature-coagulatable protein, process water and flavoring agent. The dry mixture and the emulsion or solution of low temperature-coagulatable protein, process water and flavor are then mixed to form the dough for extrusion. The extruded pasta products are then preferably subjected to high temperature drying, as previously described. A particular sequence to the mixture of the constituents is not essential to the invention, and the mixture may be performed in any convenient sequence.

A further embodiment of the invention involves the use of sulfhydryl reducing agents in the pasta dough without a low temperature-coagulatable protein. When used without a low temperature-coagulatable protein, the pasta dough containing the sulfhydryl reducing agent also exhibits the ability to retain the flavor of a lipid-based or non-lipid-based flavoring agent even after cooking. This pasta dough also exhibits the advantage of a reduction in the added moisture necessary to form the dough. The reduced added moisture content of the pasta dough is in the range of from 8% to 23% by weight of the pasta dough.

The pasta dough with a sulfhydryl reducing agent but no low temperature-coagulatable protein is generally made by a series of steps which begins with the dry mixing of the sulfhydryl reducing agent or agents and the chosen wheat flour. This mixing generally takes place in a vertical cutter mixer. The mixing may be carried out as a batch process or as a continuous process.

In a separate step, the lipid-based flavoring agent is added to the process water and mixed until a uniform emulsion is obtained. If a non-lipid-based flavoring agent is added to the process water, a uniform solution is formed.

After the uniform emulsion or solution has been formed, it is added to the wheat flour/sulfhydryl reducing agent mixture and further mixed in the vertical cutter mixer for approximately one minute. At that time, the pasta dough is ready for extrusion and preferably high temperature drying, as described above. Also as described above, the sequence of mixture of the constituents is not essential to the invention.

It has been found that high temperature drying results in significantly lower solids loss during cooking of a pasta product as compared with low temperature drying. During cooking, a pasta product prepared with low temperature drying has an average solids loss of 6.02% based on the total solids content of the uncooked pasta, whereas the average solids loss during cooking of a high temperature dried pasta product is about 4.37% on the same basis. The average difference in solids loss during cooking of a pasta product prepared with low temperature drying as compared to one prepared with high temperature drying is approximately 1.65%, based on the total solids content of the uncooked pasta product.

High temperature drying also results in the retention of flavor in a flavored pasta product after cooking. The flavor retention attributable to high temperature drying is present in pasta products prepared in accordance with the descriptions set forth herein as well as pasta products prepared by conventional techniques.

Typical high temperature drying of pasta products is conducted at 175°F (79.4°C) or higher, and preferably at about 180°F (82.2°C) dry bulb, and about 165°F (73.9°C) wet bulb, for approximately 75 minutes. In contrast, conventional low temperature drying of pasta products is typically conducted at about 110°F (43.3°C) dry bulb, and about 98°F (36.7°C) wet bulb for approximately 12 hours. Both high temperature and low temperature drying commonly take place at about 70% relative humidity.

Subsequent to the high temperature drying, the pasta product can be packaged for distribution to consumers. The major advantages of this pasta product to consumers are its flavored state and the fact that it can be prepared in a microwave oven. Both of these properties of the pasta product contribute to its one-step preparation characteristic, which is particularly advantageous to consumers.

The pre-flavored nature of the product eliminates the need to prepare or add a flavoring agent as an additional step in the preparation of the pasta, and the properties of this pasta product prevent the flavoring agent from dispersing into the cooking water which will be drained from the pasta if prepared in a conventional fashion by boiling in water. Preparation in a microwave oven is also time-efficient, because it eliminates the necessity of draining the pasta after cooking. Microwave preparation of the pasta product requires only enough water to swell the pasta to its cooked form and consistency, thereby leaving no excess cooking water to be drained.

All of the above-described embodiments of the flavored pasta product are capable of preparation in a microwave oven. Microwave preparation eliminates the need for draining the pasta after cooking, and the flavored nature of the pasta product eliminates the need to add any sauces or flavorings to the product.

In addition to the pasta products described above, the pasta dough may also be subjected to a frying process in order to prepare a snack food product or a shelf-stable instant noodle. The snack food product and instant noodle are prepared from the pasta dough before it is subjected to a drying step.

To make the snack food product, the undried pasta dough is preferably extruded directly into a suitable frying oil that is maintained at a temperature between about 300°F (148.9°C) and about 400°F (204.4°C) and is cooked in the hot oil for approximately 40 to 90 seconds. As an alternative to direct extrusion to the hot oil, the extruded pasta dough may be transported or conveyed from the extruder to the frying oil. Suitable fryers include conventional french-fry fryers with perforate baskets and continuous fryers which use perforate belts to move the pasta dough through the hot oil. Suitable oils used to cook the extruded pasta dough are vegetable oils such as corn oil, peanut oil, soybean oil, cottonseed oil and palm oil. The fryer into which the pasta dough is extruded has some means for keeping the dough submerged in the oil for the required times. The most common means are mixing or submersing paddles or a belt or conveyor.

The pasta dough may be extruded into the fryer in any desired snack food shape such as slices, elongated rods, strips, spirals and twists. The thickness of the extruded pasta shape should be in the range of from 0.01 inch (0.254mm) to 0.10 inch (2.54mm) for optimal textural characteristics after frying. Although extrusion is a preferred method of forming pasta dough shapes, any suitable method of formation would be satisfactory, such as cutting, sheeting, slicing, pressing or molding. After removal from the fryer, oil is allowed to drain from the fried product and the snack food product may then be optionally seasoned with salt in an amount between about 0.5% and about 1.5% by weight.

It has been found that the use of both an added sulfhydryl reducing agent and an added low temperature-coagulatable protein in the pasta dough enhances the textural and flavor characteristics of snack food products made therefrom. Also, a frying time of about 50 to 60 seconds at an oil temperature of about 380°F (193.3°C) seems to yield snack food products with optimal textural and flavor characteristics.

The improvement of the present snack food product is derived from the flavored dough used to make the product. Because the dough is flavored, there is no need to perform a separate flavoring step after the frying of the product. The flavored dough also provides a more consistent flavor to the snack food product, because the flavor is dispersed throughout the product rather than just on the surface, as is common in the art.

The instant noodle is made in a manner similar to that used for preparation of the snack food product. The undried pasta dough as described above is preferably extruded into a suitable frying oil at a temperature between about 300°F (148.9°C) and about 400°F (204.4°C). However, to make an instant noodle, the pasta dough is fried until it contains between about 0% by weight to about 10% by weight moisture. The frying time necessary to obtain this moisture content in the product is typically somewhat less than that necessary to make the snack food product. Generally, the frying time necessary to produce the instant noodle product is between about 2 seconds and about 40 seconds.

The same fryers and oils described above as suitable for use in making the snack food product are also suitable for making the shelf-stable instant noodle product. The thickness of the pasta dough used to make the noodle is also in the same range as the thickness of the pasta dough used to make the snack food product, namely from 0.01 inch (0.254mm) to 0.10 inch (2.54mm). As with the snack food product and the pasta dough, the flavor is dispersed throughout the instant noodle.

The features and advantages of the process of the invention are further demonstrated by the following examples. In this specification and in the following examples, all parts and percentages are by weight on an as-is basis, and all temperatures are in degrees Celsius, unless expressly stated to be otherwise.

EXAMPLES 1-10

Pasta Products Made With Egg White Solids But With No Sulfhydryl Reducing Agent

In general, the following steps were used in Examples 1-10 to make microwavable, flavored pasta products using egg white solids but no sulfhydryl reducing agent.

The egg whites were mixed in water using a high speed, high shear mixer. The flavors and color (if required) were mixed in the solution until uniform. The solution was then added slowly to semolina flour in a paddle type Hobart mixer and mixed for six minutes to make a dough. A batch of this dough was placed in the former vessel of an extruder under the following conditions: barrel temperature: 120°F (48.9°C), vacuum: 10-25 inches (250-625 mm); amperage: 5-10; and back pressure: 1800-2700 psi (12409-18614 kPa). Using a standard elbow die, the product was cut about 15-20 mm in length, with a 5 mm diameter and a 0.7 mm wall thickness. Samples were collected on screen trays and dried in a laboratory dryer for about 6-8 hours with 165°F (73.9°C) dry bulb and 150°F (65.6°C) wet bulb temperatures at about 70% relative humidity. This produced a finished product in the 6-11% moisture range.

The following table reports the ingredients and amounts used in Examples 1-10. In all of the examples and Tables, "T.S." is the abbreviation for total solids, "HVP" is the abbreviation for hydrolyzed vegetable protein, "BHA" is the abbreviation for butylated hydroxyanisole, "GMS" is the abbreviation for glycerol monostearate, "MSG" is the abbreviation for mono-sodium glutamate, and "ribotide" is a mixture of disodium inosinate and disodium guanylate.

## TABLE I

### Weight in Grams

| Example (% T.S.) | 1 | 2 | 3 | 4 |
|---|---|---|---|---|
| Semolina (87) | 1910.00 | 1870.00 | 10,000.00 | 1880.00 |
| Egg White Solids | 30.00 | 30.00 | 160.00 | 30.00 |
| Water | 550.00 | 490.00 | 2200.00 | 545.00 |
| Cheese Powder | 30.00 | 40.00 | -- | -- |
| Cheese Paste (62) | 30.00 | 60.00 | 345.00 | -- |
| Beef Extract (80) | -- | -- | -- | 76.00 |
| Salt | -- | 25.00 | -- | -- |
| MSG | -- | 2.00 | -- | -- |
| Onion Powder | -- | -- | -- | 10.00 |
| Cheese (70) | -- | -- | 475.00 | -- |
| TOTAL | 2550.00 | 2517.00 | 13,180.00 | 2541.00 |

| Example (% T.S.) | 5 | 6 | 7 | 8 |
|---|---|---|---|---|
| Semolina (87) | 3940.00 | 10,000.00 | 10,000.00 | 3960.00 |
| Egg White Solids | 60.00 | 151.75 | 151.75 | 90.00 |
| Water | 811.11 | 2291.11 | 2291.11 | 720.00 |
| Cheese Paste (62) | -- | -- | -- | 60.00 |
| Beef Extract (80) | 185.15 | -- | -- | -- |
| Beef Tallow | 46.37 | -- | -- | -- |
| Onion Powder | 26.78 | 8.40 | 8.40 | 19.98 |
| HVP | 17.57 | -- | -- | -- |
| Chicken Fat | -- | 167.78 | 167.78 | -- |
| Chicken Powder | -- | 201.32 | 201.32 | -- |
| Lecithin | -- | 5.05 | 5.05 | -- |
| Oleoresins | -- | 11.40 | 11.40 | 0.45 |
| Tomato Paste (45) | -- | -- | -- | 399.96 |
| Hydrogenated Soy Oil | -- | -- | -- | 59.93 |
| Garlic Powder | -- | -- | -- | 2.00 |
| BHA | -- | -- | 0.07 | -- |
| TOTAL | 5086.98 | 12,836.81 | 12,836.88 | 5312.32 |

## TABLE I (Cont'd)

## Weight in Grams

| Example (% T.S.) | 9 | 10 |
|---|---|---|
| Semolina (87) | 6000.00 | 6000.00 |
| Egg White Solids | 190.00 | 190.00 |
| Water | 880.51 | 1061.23 |
| Cheese Powder | -- | -- |
| Cheese Paste (62) | 100.00 | -- |
| Onion Powder | 50.00 | 11.25 |
| Chicken Fat | -- | 81.76 |
| Chicken Powder | -- | 130.82 |
| Lecithin | -- | 6.81 |
| Oleoresins | 1.04 | 13.79 |
| Tomato Paste (45) | 480.00 | -- |
| Garlic Powder | 5.00 | -- |
| Ribotide | 3.00 | 3.00 |
| Color | 0.05 | -- |
| GMS | 180.00 | 60.00 |
| TOTAL | 7889.60 | 7558.66 |

The pasta products made from the above-described pasta doughs containing egg white solids as an added low temperature-coagulatable protein (Examples 1-10) were microwave-cookable and retained their respective flavors following cooking.

EXAMPLES 11-16

Pasta Products Made With Egg Yolk Solids but with no Sulfhydryl Reducing Agent

In general, the same steps described above for Examples 1-10 are also used in Examples 11-16, however, egg yolk solids are used in place of the egg white solids as the added low temperature-coagulatable protein.

The following table reports the ingredients and amounts used in Examples 11-16.

8

## TABLE II

## Weight in Grams

| Example (% T.S.) | 11 | 12 | 13 |
|---|---|---|---|
| Semolina Flour (86.6) | -- | 5000.00 | 5000.00 |
| Semolina (86.4) | 5000.00 | -- | -- |
| Chicken Flavor (82.4) | -- | 262.00 | -- |
| Beef Flavor (80.0) | -- | -- | 235.00 |
| Alfredo Flavor (60.0) | -- | -- | -- |
| Cheese Flavor (60.0) | -- | -- | -- |
| Cysteine | -- | -- | -- |
| Egg Yolk Solids | 100.00 | 100.00 | 100.00 |
| Water | 1400.00 | 1470.17 | 1456.18 |
| Tomato Paste (31.0) | -- | -- | -- |
| Cheese Powder | -- | -- | -- |
| Jalapeno Puree (10.0) | -- | -- | -- |
| Butter Flavor | -- | -- | -- |
| TOTAL | 6500.00 | 6832.17 | 6791.18 |

| Example (% T.S.) | 14 | 15 | 16 |
|---|---|---|---|
| Semolina Flour (86.6) | 5000.00 | 5000.00 | -- |
| Semolina (86.4) | | | 5000.00 |
| Chicken Flavor (82.4) | -- | -- | -- |
| Beef Flavor (80.0) | -- | -- | -- |
| Alfredo Flavor (60.0) | 462.00 | -- | -- |
| Cheese Flavor (60.0) | -- | 291.67 | -- |
| Cysteine | -- | -- | -- |
| Egg Yolk Solids | 100.00 | 100.00 | 200.00 |
| Water | 1360.35 | 1175.88 | 1257.14 |
| Tomato Paste (31.0) | -- | 166.67 | -- |
| Cheese Powder | -- | 28.33 | -- |
| Jalapeno Puree (10.0) | -- | 150.00 | -- |
| Butter Flavor | -- | 1.66 | -- |
| TOTAL | 6922.35 | 6914.21 | 6457.14 |

The pasta products made from the above-described pasta doughs containing egg yolk solids as an added low temperature-coagulatable protein (Examples 11-16) were microwave-cookable, and retain their respective flavors following cooking.

EXAMPLES 17-24

Pasta Products Made with Sulfhydryl Reducing Agents

Examples 17-24 demonstrate the use of sulfhydryl reducing agents in microwavable, flavored pasta products which do not contain egg white solids. In general, the following steps were followed to produce these microwavable, flavored pasta products.

The sulfhydryl reducing agents were dry mixed with semolina flour in a Hobart vertical cutter mixer. All flavor ingredients were added to water and mixed until uniform. The mixture of flavor ingredients and water was added to semolina and reducing agent mixture, and mixed one minute in a vertical cutter mixer. The batch was placed in the former vessel of an extruder under the same conditions as in Examples 1-10, but with a barrel temperature of 140°F (60°C) and no vacuum. Samples were collected on screen trays and dried in a laboratory dryer for about 6-8 hours with 165°F (73.9°C) dry bulb and 150°F (65.6°C) wet bulb temperatures at about 65% relative humidity. This produced a finished product in the 6-11% moisture range.

The following table reports the ingredients and their amounts used in Examples 17-24:

## TABLE III

## Weight in Grams

| Example (% T.S.) | 17 | 18 | 19 | 20 |
|---|---|---|---|---|
| Semolina (87) | 6000.00 | 6000.00 | 6000.00 | 6000.00 |
| Water | 1064.67 | 867.13 | 764.00 | 461.63 |
| Cheese Paste (62) | -- | -- | 410.00 | 132.00 |
| Beef Extract (80) | -- | 205.90 | -- | -- |
| Beef Tallow | -- | 5.04 | | |
| Onion Powder | 12.37 | 2.90 | -- | -- |
| HVP | -- | -- | 1.91 | -- |
| Chicken Fat | 89.94 | | | |
| Chicken Powder | 143.90 | -- | -- | -- |
| Lecithin | 7.49 | -- | -- | -- |
| Oleoresins | 15.17 | -- | -- | -- |
| Tomato Paste (45) | -- | -- | -- | 300.00 |
| Ribotide | 2.00 | -- | -- | -- |
| Color | -- | 50.00 | -- | -- |
| $Na_2S_2O_5$ | 0.60 | 0.90 | 0.90 | 0.90 |
| Cysteine | 3.00 | 3.00 | 3.00 | 3.00 |
| Lactic Acid | -- | -- | 10.00 | -- |
| Yeast, Autolyzed | -- | 30.00 | -- | -- |
| Butter Flavor | -- | -- | 1.00 | 0.05 |
| Pureed Peppers (10) | -- | -- | -- | 228.00 |
| TOTAL | 7339.14 | 7164.87 | 7190.81 | 7125.58 |

## TABLE III (Cont'd)

### Weight in Grams

| Example (% T.S.) | 21 | 22 | 23 | 24 |
|---|---|---|---|---|
| Semolina (87) | 6000.00 | 6000.00 | -- | -- |
| Water | 575.92 | 800.00 | 611.11 | 836.00 |
| Cheese Paste (62) | -- | -- | 410.00 | 410.00 |
| MSG | -- | 5.00 | -- | -- |
| Beef Extract (80) | 64.34 | -- | -- | -- |
| Beef Tallow | 16.13 | -- | -- | -- . |
| Onion Powder | 9.27 | -- | -- | -- |
| HVP | 6.13 | -- | -- | -- |
| Garlic Powder | 0.20 | 10.00 | -- | -- |
| Mushroom | 50.00 | -- | -- | -- |
| $Na_2S_2O_5$ | 0.90 | 1.00 | 1.20 | 1.20 |
| Cysteine | 3.00 | 3.00 | 3.00 | 3.00 |
| Lactic Acid (85) | 6.00 | -- | 10.00 | 10.00 |
| Yeast, Autolyzed | 30.00 | -- | -- | -- |
| GMS | -- | -- | 22.50 | 22.50 |
| Butter Flavor | 0.05 | 2.00 | 1.00 | 1.00 |
| Spices | 5.00 | -- | -- | -- |
| Sour Cream (19) | 505.00 | -- | -- | -- |
| Cheese (70) | -- | 450.00 | -- | -- |
| $TiO_2$ | -- | 6.00 | -- | -- |
| Spring Wheat Flour (87) | -- | -- | 6000.00 | -- |
| Durum Wheat Flour (87) | -- | -- | -- | 6000.00 |
| **TOTAL** | 7271.94 | 7277.00 | 7058.81 | 7283.70 |

The pasta products made from the above-identified pasta doughs containing cysteine and sodium metabisulfite as added sulfhydryl reducing agents (Examples 17-24) were microwave-cookable, and retained their respective flavors following cooking.

EXAMPLES 25-28

Pasta Products Made With Egg White Solids and a Sulfhydryl Reducing Agent

The pasta products of Examples 25-28 are prepared in a manner similar to that used in Examples 1-10, however, the added sulfhydryl reducing agent is dry mixed with the semolina flour before the egg white solution is added thereto.

The following table reports the ingredients and amounts used in Examples 25-28:

TABLE IV

| Weight in Grams | | | | |
|---|---|---|---|---|
| Example (% T.S.) | 25 | 26 | 27 | 28 |
| Semolina Flour (87) | 5000.00 | 5000.00 | 6000.00 | 5000.00 |
| Semolina (86.4) | -- | -- | -- | -- |
| Chicken Flavor (82.4) | 262.00 | -- | -- | -- |
| Beef Flavor (80.0) | -- | 235.00 | -- | -- |
| Alfredo Flavor (60.0) | -- | -- | 555.00 | -- |
| Cheese Flavor (60.0) | -- | -- | -- | 291.67 |
| Cysteine | 2.50 | 2.50 | 3.00 | 2.50 |
| Egg White Solids | 75.00 | 75.00 | 60.00 | 75.00 |
| Water | 1459.58 | 1445.59 | 1605.53 | 1165.29 |
| Tomato Paste (31.0) | -- | -- | -- | 166.67 |
| Cheese Powder | -- | -- | -- | 28.33 |
| Jalapeno Puree (10.0) | -- | -- | -- | 150.00 |
| Butter Flavor | -- | -- | -- | 1.66 |
| TOTAL | 6799.08 | 6758.09 | 8223.53 | 6881.12 |

The pasta products made from the above-described pasta doughs containing egg white solids as an added low temperature-coagulatable protein and cysteine as an added sulfhydryl reducing agent (Examples 25-28) are microwave-cookable, and retained their respective flavors following cooking.

EXAMPLES 29-32

High Temperature Drying of Pasta Products

The pasta products of Examples 29-32 were prepared in a manner similar to that used in Examples 17-24 except for the final drying step. In Examples 29-32, the extruded pasta shapes were subjected to a high temperature drying step. The high temperature drying comprises subjecting the extruded pasta product to continuous drying for 75 minutes with 180°F (82.2°C) dry bulb and 165°F (73.9°C) wet bulb temperatures at 72% relative humidity.

The following table shows the ingredients and their amounts used in Examples 29-32.

TABLE V

| Weight in Grams | | | | |
|---|---|---|---|---|
| Example (% T.S.) | 29 | 30 | 31 | 32 |
| Semolina (87) | 6000.00 | 6000.00 | 6000.00 | 6000.00 |
| Egg White Solids | 80.00 | -- | -- | -- |
| Whey Protein Concentrate | -- | 240.00 | 120.00 | -- |
| Cysteine | 2.50 | -- | 2.50 | 4.43 |
| Cheese Paste (60) | 30.00 | 30.00 | 30.00 | 30.00 |
| Water | 907.11 | 956.84 | 919.74 | 882.45 |
| TOTAL | 7019.61 | 7226.84 | 7072.24 | 6916.88 |

The pasta products made from the above-described pasta doughs which were subjected to a high temperature drying step (Examples 29-32) were microwave-cookable, and retained their cheese flavor following cooking.

EXAMPLES 33-35

Total Solids Loss During Microwave Cooking of the Pasta Product

EP 0 314 265 B1

In Examples 33-35, a comparison was conducted to determine the difference in solids loss during microwave cooking between pasta products subjected to high temperature drying and pasta products subjected to conventional low temperature drying.

Examples 33 and 34 also demonstrate the substantially reduced extrusion pressures achieved when a sulfhydryl reducing agent such as cysteine is included in the pasta dough. The reduced extrusion pressures of Examples 33 and 34 are a drastic contrast to the extrusion pressure of control Example 35. The composition of the pasta dough for Examples 33-35 is presented below in Table VI.

TABLE VI

| Weight in Grams | | | |
|---|---|---|---|
| Example (% T.S.) | 33 | 34 | 35 |
| Semolina (86.7) | 6000.00 | 6000.00 | 6000.00 |
| Cheese Paste (60) | 410.00 | 410.00 | 410.00 |
| Lactic Acid (85) | 8.00 | 8.00 | 8.00 |
| Cysteine | 5.00 | 5.00 | -- |
| Natural Flavor | 2.00 | 2.00 | 2.00 |
| Water | 1371.67 | 756.23 | 756.23 |
| TOTAL | 7796.67 | 7181.23 | 7176.23 |
| extrusion pressure | 1200 psi | 1800 psi | 3400 psi |
| * NOTE: Example 35 is a control sample without a sulfhydryl reducing agent. | | | |

The procedures used to form the pasta dough and extrude the pasta products of Examples 33-35 are similar to those set forth for Examples 17-24. However, after extrusion the pasta product was split into two parts with part (A) dried on trays for eight hours at 110°F (43.3C) dry bulb and 98°F (36.7°C) wet bulb at about 65% relative humidity, and part (B) dried for 75 minutes at 180°F (82.2°C) dry bulb and 165°F (73.9°C) wet bulb at about 72% relative humidity.

After the products of Examples 33-35 were dried, they were cooked in a microwave oven and the cooking losses of the solids were measured using the following methods:

170 grams of dried pasta were added to a one liter Pyrex beaker with 350 ml tap water at about 70°F (21.1°C). The pasta was cooked on highest setting in a Litton Generation II Model 2094 microwave oven (650 watts) for four minutes. At the end of four minutes, the pasta was stirred and again microwaved at the highest setting for an additional four minutes. The pasta was then removed from the oven, 500 ml tap water were added, and the mixture stirred for one minute. The pasta was then drained for 2-1/2 minutes, making sure to save all the drain water. The cooked pasta and the drain water were weighed and recorded, and the drain water submitted for total solids analysis.

The following calculations were then performed in order to determine the percentage of solids loss to the cooking and added water.

(1) $\dfrac{\text{% Total Solids in the Drain Water}}{100}$ x Weight of Water = Grams Solids Loss

(2) $\dfrac{\text{Grams Solids Loss}}{\text{Original Pasta Weight}}$ x 100 = % Solids Loss

The results of the comparison of solids loss during microwave cooking of pasta products subjected to high temperature drying and pasta products subjected to low temperature drying are presented below in Table VII.

13

## TABLE VII

| Example | % Solids Loss |
|---|---|
| **33 (30% Moisture)** | |
| [A] Low Temperature Dried | 5.41 |
| [B] High Temperature Dried | 3.09 |
| **34 (24% Moisture)** | |
| [A] Low Temperature Dried | 6.41 |
| [B] High Temperature Dried | 4.30 |
| **35 (24% Moisture)** | |
| [A] Low Temperature Dried | 6.80 |
| [B] High Temperature Dried | 4.88 |

EXAMPLE 36

Cooking Instructions for a One-Step Pasta Product

The pasta product of the present invention may be prepared in one step by adding six ounces (170 g) of the pasta product to two cups of rapidly boiling water, stirring until a full boil returns and then cooking at a low boil until all the water has disappeared (about 5-7 minutes).

EXAMPLE 37

Microwave Instructions for the Inventive Pasta Product

The pasta product of the present invention may be prepared in a microwave oven by following the procedure set forth below.

1-1/2 cups tap water, one level teaspoon salt, six ounces (170 g) of pasta and 1/4 cup butter were added to a 1-1/2 quart (0,95-0,475 ℓ) Pyrex bowl. A microwave oven was used to heat the contents of the bowl, on high power, uncovered, for four minutes. The bowl was removed from the oven and the contents stirred. The contents of the bowl were heated for an additional four minutes on high power. The bowl was then removed from the oven, the contents stirred, and served.

EXAMPLES 38-65

Snack Food Products from the Pasta Dough of Examples 1-28

Flavored pasta doughs are prepared according to the descriptions set out in Examples 1-28 above, with the exception that the doughs are not subjected to a drying step following extrusion. Instead, the doughs are extruded directly into a Toastmaster Model N 2115 fryer (a conventional french-fry fryer).

The pasta doughs are fried in hot oil in two shapes for each flavored dough type (undried doughs of Examples 1-28). "Bow ties" (rectangular strips which are pinched at their centers) are sheeted, and spirals (rectangular strips twisted about their longitudinal axis to form a spiral shape) are extruded. The ribbons of pasta dough from which the "bow ties" and spirals are formed are about 0.03 inch (0,75 mm) thick. Each shape of each type of flavored dough is then subjected to four different frying tests:

14

| Test No. | Frying Oil Temperature | Frying Time |
|---|---|---|
| 1 | 320°F (160°C) | 70-80 seconds |
| 2 | 350°F (177°C) | 60-70 seconds |
| 3 | 360°F (182°C) | 55-65 seconds |
| 4 | 380°F (193°C) | 50-60 seconds |

In general, the products of Test 1 have the lightest color, most near that as extruded. These products also have the hardest texture.

Products of Test 2 have a more golden brown color typical of most conventional snack products. The texture is closer to normal snacks, perhaps a bit harder.

Products of Test 3 have a definite light brown color with more of a toasted flavor. The texture is almost like that of a conventional fried potato chip (commonly referred to as a Saratoga chip).

Products of Test 4 have the darkest brown color with a definite toasted flavor which tends to mask any internal flavor. The texture is the softest and is also like that of a conventional fried potato chip.

**Claims**

1. A pasta dough comprising a mixture of from 70 to 85% by weight of wheat flour, from 8 to 23% by weight of added moisture, a flavoring agent in an amount such that, after cooking, the flavour is retained in the resulting cooked pasta, and at least one ingredient selected from
   i) a protein which coagulates at a temperature of 160°F (71.1°C) or less in an amount of from 0.50 to 2.50% by weight, and
   ii) a sulfhydryl reducing agent in an amount of from 0.0075% to 0.075% by weight.

2. A pasta dough according to claim 1, wherein the protein is selected from albumin, whole egg, egg white, egg yolk, soy bean isolate and whey protein concentrate.

3. A pasta dough according to either claim 1 or claim 2, wherein the flavoring agent is a lipid-based flavoring agent.

4. A pasta dough according to claim 3, wherein the flavoring agent is selected from chicken fat, sour cream, butter, cheese, cheese paste, beef extract, beef tallow and combinations thereof.

5. A pasta dough according to any one of claims 1 to 4, wherein the sulfhydryl reducing agent is selected from sodium metabisulfite, cysteine, water-soluble cysteine salts, glutathione and combinations thereof.

6. A pasta product comprising the pasta dough of any one of claims 1 to 5, which has been extruded and subjected to high temperature drying at about 180°F (82.2°C) dry bulb, and about 165°F (73.9°C) wet bulb, for about 75 minutes.

7. A pasta product according to claim 6, wherein the high temperature drying is conducted to about 70% relative humidity.

8. A cooked pasta product comprising a pasta dough according to any one of claims 1 to 5 which has been cooked by microwaves.

9. A cooked pasta product comprising a pasta dough according to any one of claims 1 to 5 which has been cooked by frying.

10. A snack food product comprising an extruded pasta dough which is fried in oil for from 40 seconds to 90 seconds at a temperature of from 300°F (148.9°C) to 400°F (204.4°C) said pasta dough comprising a mixture of from 70% to 85% by weight wheat flour, from 8% to 23% by weight added moisture, from 0.50% to 2.50% by weight of an added protein which coagulates at a temperature of 160°F (71.1°C) or less and a sufficient amount of an added flavoring agent to cause the snack food product to retain the flavor after frying.

EP 0 314 265 B1

**11.** A snack food product according to claim 10, wherein the pasta dough is extruded in the form of a ribbon with a thickness of from 0.01 to 0.10 inch (from 0.254 to 2.54mm).

**12.** A snack food product according to either claim 10 or claim 11, wherein the added protein is selected from albumin, whole egg, egg white, egg yolk, soy bean isolate and whey protein concentrate.

**13.** A snack food product according to any one of claims 10 to 12, wherein the flavoring agent is a lipid-based flavoring agent.

**14.** A snack food product according to any one of claims 10 to 13, further comprising from 0.0075% to 0.075% by weight of at least one added sulfhydryl reducing agent.

**15.** A snack food product according to claim 14, wherein the sulfhydryl reducing agent is selected from sodium metabisulfite, cysteine, water-soluble cysteine salts, glutathione and combinations thereof.

**16.** A snack food product according to claim 15, wherein the sulfhydryl reducing agent is cysteine and the added protein is egg white.

**17.** An instant noodle product comprising an extruded pasta dough which is fried in oil to a moisture content of from 0% to 10% by weight, said oil being at a temperature of from 300°F (148.9°C) to 400°F (204.4°C) said pasta dough comprising from 70% to 85% by weight wheat flour, from 8% to 23% by weight added moisture, from 0.50% to 2.50% by weight of an added protein which coagulates at a temperature of 160°F (71.1°C) or less and a sufficient amount of an added flavoring agent to cause the snack food product to retain the flavor after frying.

**18.** An instant noodle product according to claim 17, wherein the pasta dough is extruded in the form of a ribbon with a thickness of from 0.01 to 0.10 inch (from 0.254 to 2.54mm).

**19.** An instant noodle product according to claim 17 or claim 18, wherein the added protein is selected from albumin, whole egg, egg white, egg yolk, soy bean isolate and whey protein concentrate.

**20.** An instant noodle product according to any one of claims 17 to 19, wherein the flavoring agent is a lipid-based flavoring agent.

**21.** An instant noodle product according to any one of claims 17 to 20, further comprising from 0.0075% to 0.075% by weight of at least one added sulfhydryl reducing agent.

**22.** An instant noodle product according to claim 21, wherein the sulfhydryl reducing agent is selected from sodium metabisulfite, cysteine, water-soluble cysteine salts, glutathione and combinations thereof.

**Revendications**

**1.** Pâte pour la préparation de pâtes alimentaires, comprenant un mélange de 70 à 85% en poids de farine de froment, de 8 à 23% en poids d'humidité ajoutée, d'un agent aromatique en une quantité telle que, après cuisson, l'arôme soit conservé dans les pâtes cuites résultantes, et au moins d'un ingrédient choisi parmi :
    i) une protéine qui coagule à une température de 71,1°C (160°F) ou moins en une quantité de 0,50 à 2,50% en poids, et
    ii) un agent réducteur de groupes sulfhydryle en une quantité comprise entre 0,0075% et 0,075% en poids.

**2.** Pâte pour la préparation de pâtes alimentaires selon la revendication 1, dans laquelle la protéine est choisie parmi l'albumine, l'oeuf entier, le blanc d'oeuf, le jaune d'oeuf, l'isolat de soja et le concentré de protéines de petit-lait.

**3.** Pâte pour la préparation de pâtes alimentaires selon la revendication 1 ou la revendication 2, dans laquelle l'agent aromatique est un agent aromatique à base de lipides.

16

**4.** Pâte pour la préparation de pâtes alimentaires selon la revendication 3, dans laquelle l'agent aromatique est choisi parmi la graisse de poulet, la crème aigre, le beurre, le fromage, le fromage fondu, l'extrait de boeuf, le suif de boeuf et leurs combinaisons.

**5.** Pâte pour la préparation de pâtes alimentaires selon l'une des revendications 1 à 4, dans laquelle l'agent réducteur de groupes sulfhydryle est choisi parmi le métabisulfite de sodium, la cystéine, des sels de cystéine solubles dans l'eau, la glutathione et leurs combinaisons.

**6.** Pâtes alimentaires préparées à partir de la pâte de l'une quelconque des revendications 1 à 5, qui a été extrudée et soumise à un séchage à température élevée d'environ 82,2°C (180°F) au thermomètre sec et d'environ 73,9°C (165°F) au thermomètre mouillé, pendant environ 75 mn.

**7.** Pâtes alimentaires selon la revendication 6, dans lesquelles le séchage à température élevée est effectué à une humidité relative d'environ 70%.

**8.** Pâtes alimentaires cuites préparées à partir d'une pâte selon l'une des revendications 1 à 5, qui a été cuite aux microondes.

**9.** Pâtes alimentaires cuites préparées à partir d'une pâte selon l'une des revendications 1 à 5, qui a été cuite par friture.

**10.** Produit de restauration rapide comprenant une pâte pour pâtes alimentaires extrudée, qui est frite dans de l'huile pendant 40 à 90 secondes à une température de 148,9°C (300°F) à 204,4°C (400°F), cette pâte pour pâtes alimentaires comprenant un mélange de 70 à 85% en poids de farine de froment, de 8 à 23% en poids d'humidité ajoutée, de 0,50 à 2,50% en poids d'une protéine ajoutée qui coagule à une température égale ou inférieure à 71,1°C (160°F) et d'une quantité suffisante d'un agent aromatique ajouté pour que le produit de restauration rapide conserve son arôme après friture.

**11.** Produit de restauration rapide selon la revendication 10, dans lequel la pâte pour pâtes alimentaires est extrudée sous la forme d'un ruban qui a une épaisseur de 0,25 à 2,54 mm (0,01 à 0,10 pouce).

**12.** Produit de restauration rapide selon la revendication 10 ou la revendication 11, dans lequel la protéine ajoutée est choisie parmi l'albumine, l'oeuf entier, le blanc d'oeuf, le jaune d'oeuf, l'isolat de soja et un concentré de protéines de petit-lait.

**13.** Produit de restauration rapide selon l'une des revendications 10 à 12, dans lequel l'agent aromatique est un agent aromatique à base de lipides.

**14.** Produit de restauration rapide selon l'une des revendications 10 à 13, contenant en outre de 0,0075 à 0,075% en poids d'au moins un agent réducteur de groupes sulfhydryle ajouté.

**15.** Produit de restauration rapide selon la revendication 14, dans lequel l'agent réducteur de groupes sulfhydryle est choisi parmi le métabisulfite de sodium, la cystéine, des sels de cystéine solubles dans l'eau, la glutathione et leurs combinaisons.

**16.** Produit de restauration rapide selon la revendication 15, dans lequel l'agent réducteur de groupes sulfhydryle est la cystéine et la protéine ajoutée est le blanc d'oeuf.

**17.** Nouilles instantanées comprenant une pâte pour la préparation de pâtes alimentaires extrudées, qui est frite dans l'huile jusqu'à une teneur en humidité de 0 à 10% en poids, cette huile étant à une température de 148,9°C (300°F) à 204,4°C (400°F), cette pâte pour la préparation de pâtes alimentaires comprenant 70 à 85% en poids de farine de froment, 8 à 23% en poids d'humidité ajoutée, 0,50 à 2,50% en poids d'une protéine ajoutée, qui coagule à une température inférieure ou égale à 71,1°C (160°F) et une quantité suffisante d'un agent aromatique ajouté pour que le produit de restauration rapide conserve son arôme après friture.

**18.** Nouilles instantanées selon la revendication 17, dans lesquelles la pâte pour la préparation de pâtes alimentaires est extrudée sous la forme d'un ruban qui a une épaisseur de 0,25 à 2,54 mm (0,01 à 0,10 pouce).

**19.** Nouilles instantanées selon la revendication 17 ou la revendication 18, dans lesquelles la protéine ajoutée est choisie parmi l'albumine, l'oeuf entier, le blanc d'oeuf, le jaune d'oeuf, l'isolat de soja et un concentré de protéines de petit-lait.

**20.** Nouilles instantanées selon l'une des revendications 17 à 19, dans lesquelles l'agent aromatique est un agent aromatique à base de lipides.

**21.** Nouilles instantanées selon l'une des revendications 17 à 20, contenant en outre de 0,0075 à 0,075% en poids d'au moins un agent réducteur de groupes sulfhydryle ajouté.

**22.** Nouilles instantanées selon la revendication 21, dans lesquelles l'agent réducteur de groupes sulfhydryle est choisi parmi le métabisulfite de sodium, la cystéine, des sels de cystéine solubles dans l'eau, la glutathione et leurs combinaisons.

## Patentansprüche

**1.** Nudelteig, umfassend ein Gemisch aus 70 bis 85 Gew.-% Weizenmehl, 8 bis 23 Gew.-% zugesetzte Feuchtigkeit (Flüssigkeit), ein Geschmacksmittel in einer solchen Menge, daß nach dem Kochen der Geschmack in den erhaltenen gekochten Teigwaren erhalten bleibt, und mindestens einen Bestandteil ausgewählt aus
  i) einem Protein, das bei einer Temperatur von 160°F (71,1°C) oder weniger koaguliert, in einer Menge von 0,50 bis 2,50 Gew.-%, und
  ii) einem Sulfhydryl-Reduktionsmittel in einer Menge von 0,0075 bis 0,075 Gew.-%.

**2.** Nudelteig nach Anspruch 1, wobei das Protein ausgewählt ist aus Albumin, Vollei, Eiweiß, Eigelb, Sojabohnenisolat und Molkenproteinkonzentrat.

**3.** Nudelteig nach Anspruch 1 oder 2, wobei das Geschmacksmittel ein Geschmacksmittel auf Lipidbasis ist.

**4.** Nudelteig nach Anspruch 3, wobei das Geschmacksmittel ausgewählt ist aus Hühnerfett, Sauerrahm, Butter, Käse, Käsepaste, Fleischextrakt, Rindertalg und Kombinationen davon.

**5.** Nudelteig nach einem der Ansprüche 1 bis 4, wobei das Sulfhydryl-Reduktionsmittel ausgewählt ist aus Natriummetabisulfit, Cystein, wasserlöslichen Cysteinsalzen, Glutathion und Kombinationen davon.

**6.** Teigwarenprodukt, umfassend den Nudelteig nach einem der Ansprüche 1 bis 5, das extrudiert und bei hohen Temperaturen von etwa 180°F (82,2°C) für die trockene Masse und etwa 165°F (73,9°C) für die nasse Masse während etwa 75 min getrocknet worden ist.

**7.** Teigwarenprodukt nach Anspruch 6, wobei die Hochtemperaturtrocknung auf etwa 70% relative Feuchtigkeit durchgeführt worden ist.

**8.** Gegartes Teigwarenprodukt, umfassend einen Nudelteig nach einem der Ansprüche 1 bis 5, der durch Mikrowellen gegart worden ist.

**9.** Gegartes Teigwarenprodukt, umfassend einen Nudelteig nach einem der Ansprüche 1 bis 5, der (aus)-gebacken worden ist.

**10.** Snacklebensmittelprodukt, umfassend einen extrudierten Nudelteig, der in Öl 40 bis 90 s bei einer Temperatur von 300°F (148,9°C) bis 400°F (204,4°C) (aus)gebacken worden ist, wobei der Nudelteig umfaßt 70 bis 85 Gew.-% Weizenmehl, 8 bis 23 Gew.-% zugesetzte Feuchtigkeit (Flüssigkeit), 0,50 bis 2,50 Gew.-% eines zugesetzten Proteins, das bei einer Temperatur von 160°F (71,1°C) oder darunter koaguliert, und eine ausreichende Menge eines zugesetzten Geschmacksstoffes, damit das Snacklebensmittelprodukt nach dem (Aus)backen den Geschmack beibehält.

11. Snacklebensmittelprodukt nach Anspruch 10, wobei der Nudelteig in Form eines Bandes mit einer Dicke von 0,01 bis 0,10 inch (0,254 bis 2,54 mm) extrudiert worden ist.

12. Snacklebensmittelprodukt nach Anspruch 10 oder 11, wobei das zugesetzte Protein ausgewählt ist aus Albumin, Vollei, Eiweiß, Eigelb, Sojabohnenisolat und Molkenproteinkonzentrat.

13. Snacklebensmittelprodukt nach einem der Ansprüche 10 bis 12, wobei das Geschmacksmittel ein Geschmacksmittel auf Lipidbasis ist.

14. Snacklebensmittelprodukt nach einem der Ansprüche 10 bis 13, ferner enthaltend 0,0075 bis 0,075 Gew.-% mindestens eines zugesetzten Sulfhydryl-Reduktionsmittels.

15. Snacklebensmittelprodukt nach Anspruch 14, wobei das Sulfhydryl-Reduktionsmittel ausgewählt ist aus Natriummetabisulfit, Cystein, wasserlöslichen Cysteinsalzen, Glutathion und Kombinationen davon.

16. Snacklebensmittelprodukt nach Anspruch 15, wobei das Sulfhydryl-Reduktionsmittel Cystein und das zugesetzte Protein Eiweiß ist.

17. Instantnudelprodukt, umfassend einen extrudierten Nudelteig, der in Öl auf einen Feuchtigkeitsgehalt von 0 bis 10 Gew.-% (aus)gebacken worden ist, wobei das Öl eine Temperatur von 300°F (148,9°C) bis 400°F (204,4°C) aufwies und der Nudelteig umfaßt 70 bis 85 Gew.-% Weizenmehl, 8 bis 23 Gew.-% zugesetzte Feuchtigkeit (Flüssigkeit), 0,50 bis 2,50 Gew.-% eines zugesetzten Proteins, das bei einer Temperatur von 160°F (71,1°C) oder darunter koaguliert, und eine ausreichende Menge eines zugesetzten Geschmacksmittels, das dazu führt, daß das Snacklebensmittelprodukt den Geschmack nach dem (Aus)backen beibehält.

18. Instantnudelprodukt nach Anspruch 17, wobei der Nudelteig in Form eines Bandes mit einer Dicke von 0,01 bis 0,10 inch (0,254 bis 2,54 mm) extrudiert worden ist.

19. Instantnudelprodukt nach Anspruch 17 oder 18, wobei das zugesetzte Protein ausgewählt ist aus Albumin, Vollei, Eiweiß, Figelb, Sojabohnenisolat und Molkenproteinkonzentrat.

20. Instantnudelprodukt nach einem der Ansprüche 17 bis 19, wobei das Geschmacksmittel ein Geschmacksmittel auf Lipidbasis ist.

21. Instantnudelprodukt nach einem der Ansprüche 17 bis 20, das ferner 0,0075 bis 0,075 Gew.-% mindestens eines zugesetzten Sulfhydryl-Reduktionsmittels enthält.

22. Instantnudelprodukt nach Anspruch 21, wobei das Sulfhydryl-Reduktionsmittel ausgewählt ist aus Natriummetabisulfit, Cystein, wasserlöslichen Cysteinsalzen, Glutathion und Kombinationen davon.